# EUROPÄISCHE PATENTSCHRIFT

(11) **EP 3 387 931 B1**
(45) Veröffentlichungstag und Bekanntmachung des Hinweises auf die Patenterteilung: **15.07.2020**
(21) Anmeldenummer: 17165819.8
(22) Anmeldetag: 10.04.2017
(51) Int. Cl.: A41D 19/00, C08L 15/00

(54) **VULKANISIERBARE ZUSAMMENSETZUNG ENTHALTEND HXNBR-LATEX UND POLYFUNKTIONALES EPOXID**
VULCANIZABLE COMPOSITION COMPRISING HXNBR LATEX AND POLYFUNCTIONAL EPOXIDE
COMPOSITION À VULCANISER COMPRENANT DU LATEX HXNBR ET DE L'ÉPOXYDE POLYFONCTIONNEL

(43) Veröffentlichungstag der Anmeldung: 17.10.2018
(73) Patentinhaber: ARLANXEO Deutschland GmbH, 41540 Dormagen (DE)
(72) Erfinder: Lieber, Susanna, 67663 Kaiserslautern (DE); Schneiders, Karola, 51465 Bergisch Gladbach (DE)

(56) Entgegenhaltungen:
- EP-A1- 1 779 119
- EP-A1- 2 471 851
- WO-A1-2016/072835
- DATABASE WPI Week 201424 Thomson Scientific, London, GB; AN 2014-F69080 XP002773824, & CN 103 554 565 A (ZHENJIANG SUHUI LATEX PROD CO LTD) 5. Februar 2014 (2014-02-05)

## Beschreibung

Die vorliegende Erfindung betrifft vulkanisierbare Zusammensetzungen enthaltend HXNBR-Latex und polyfunktionales Epoxid, Verfahren zur Vulkanisation von vulkanisierbaren Zusammensetzungen und Formkörper aus HXNBR-Vulkanisaten.

Gummihandschuhe sind weit verbreitet und finden vielseitige Anwendung in privaten Haushalten und in der Industrie, bspw. in der Lebensmittelindustrie, Elektronikindustrie oder im medizinischen Bereich. Dabei müssen die Gummihandschuhe im allgemeinen (1) eine **angenehme Passform** aufweisen, (2) **nicht ohne Weiteres reißen**, d.h. eine hohe Zugfestigkeit aufweisen, und (3) **formstabil** bleiben über einen längeren Zeitraum. Darüber hinaus müssen Gummihandschuhe aber auch noch bei speziellen Anwendungen hohen Temperaturen standhalten und chemikalienresistent sein.

Ein geeignetes Material zur Herstellung von Gummihandschuhen ist hydrierter carboxylierter Nitrilkautschuk-Latex (HXNBR). HXNBR ist gegenüber XNBR vorteilhaft, da es ausgezeichnete mechanische Werte bei erhöhten Temperaturen, eine **höhere Hitzestabilität** und exzellente Ozonbeständigkeit aufweist.
Im Allgemeinen wird **HXNBR** als Festkautschuk kovalent mit **Peroxiden** vernetzt.

Aus dem **Stand der Technik** sind unterschiedliche Arten von Vernetzern (=Vernetzungsmittel oder Vulkanisationsmittel; engl. cross-linker) für HXNBR-Latex bekannt.

EP-A-3 124 535 offenbart Tauchformungslatex-Zusammensetzungen enthaltend HXNBR-Latex und als Vernetzungsmittel **Schwefel, ZnO** und **organische Peroxide.** Polyfunktionale Epoxid-Vernetzungsmittel, d.h. Vernetzungsmittel mit mehr als einer funktionalen Epoxidgruppe, sind nicht erwähnt. Es wird außerdem in Abschnitt [0012] offenbart, dass es nicht möglich ist vorherzusagen, welcher Latex mit welchem Vernetzungssystem kompatibel ist. Die Vernetzung mit Schwefel und ZnO ergibt Produkte mit kurzen Dehnungen, hohen Zugfestigkeiten und gleichzeitig **hohem Modul** bei 100% Dehnung (= M100 Wert). Für die Anwendung als Handschuh sind jedoch **geringe M100 Werte** vorteilhaft. Die **Hitzebeständigkeit** bei der Schwefelvernetzung ist wie bekannt aus dem Festkautschuk **limitiert** auf maximal 135 °C. Ebenso lösen sich oberhalb 140 °C die ionischen Brücken und das Material verliert an Festigkeit. Schwefel und schwefel-basierte Vulkanisationsbeschleuniger weisen außerdem den Nachteil auf, dass dadurch Dermatitis und Typ IV Allergien ausgelöst werden können.

Aus EP-A-0 381 457 ist bekannt, dass HXNBR mit einem **Resorcinol-Formaldehyd-System** als sogenannter RFL vernetzt werden kann, wodurch **gute Festigkeiten** erhalten werden. Formaldehyd ist jedoch ein Stoff der aufgrund seiner gesundheitsgefährdenden Eigenschaften vermieden werden sollte.

EP-A-2 752 475 offenbart Zusammensetzungen enthaltend HXNBR-Latex und ein Vernetzungsmittel, wobei das Säuremonomer des HXNBR ein Mono-n-butylmaleat-Halbester oder Methoxyethylacrylat (MEA) ist. Als Vernetzungsmittel sind **Resorcin-Formaldehyd-Harze** offenbart. Auch aus EP-A-2 325 238 sind Zusammensetzungen aus HXNBR Suspension und Resorcin-Formaldehyd-Harz als Vernetzungsmittel bekannt.

WO-A-04/033573 beschreibt die Vernetzung von HXNBR-Latex mit **Diisocyanaten.** Isocyanate sind jedoch hoch giftige und umweltbedenkliche Chemikalien und sollten daher vermieden werden. Auch WO-A-03/042309 offenbart HXNBR-Zusammensetzungen mit Isocyanat-Vernetzungsmittel.

In EP-A-1 541 630 wird eine vulkanisierbare Latex-Zusammensetzung, enthaltend einen carboxyl- oder hydroxylgruppenhaltigen Latex, beispielsweise HXNBR, ein carboxyl- oder hydroxylgruppenhaltiges Polyelektrolyt und ein polyfunktionales Vernetzungsmittel welches mit den Carboxyl- oder Hydroxylgruppen des Polymers und dem Polyelektrolyt vernetzt. Als Vernetzungsmittel sind polyfunktionale **Aziridine** offenbart.

Der Stand der Technik zeigt, dass der Einsatz bisher bekannter Vernetzungsmittel **Nachteile** auf die Produkteigenschaften des hergestellten Tauchformungsartikels hatten, d.h. entweder löst das Vernetzungsmittel eine **allergische Reaktion** aus, ist **umweltbedenklich**, **giftig**, nicht ausreichend **hitzestabil** oder führt zu Produkten, die **keine ausreichend hohe maximale Dehnung** oder **Zugfestigkeit** aufweisen.

Die bekannten **vernetzbaren Tauchformungslatex-Zusammensetzungen**, sind daher für bestimmte Anwendungszwecke noch nicht befriedigend.

Demgemäß lag eine **Aufgabe** der vorliegenden Erfindung darin, vernetzbare Tauchformungslatex-Zusammensetzungen bereitzustellen, welche die Nachteile des Standes der Technik überwinden, insbesondere **weniger Hautreizend** sind, **umweltverträglich**, eine hohe Zugfestigkeit, eine hohe maximale Dehnung und einen **ausgezeichneten M100-Wert** aufweisen. Eine weitere Aufgabe besteht darin, Formkörper, insbesondere Handschuhe, bereitzustellen, welche exzellente **chemische Beständigkeit, Hitzebeständigkeit** und **Flexibilität** aufweisen.

Die Lösung der Aufgabe und Gegenstand der vorliegenden Erfindung ist nun eine **vernetzbare Zusammensetzung** enthaltend
(a) hydrierten carboxylierten Nitrilkautschuk-Latex (HXNBR-Latex)
(b) polyfunktionales Epoxid, und
(c) optional ein Mittel zur Einstellung des pH-Wertes,
wobei die Zusammensetzung einen pH Wert von 9 bis weniger als 11 aufweist.

HXNBR-Latex wurde mit einem polyfunktionalen Epoxid versetzt und bei erhöhten Temperaturen vernetzt. Dabei konnten Tauchformungsartikel mit **sehr hohe Zugfestigkeiten** (Fₘₐₓ) bei **gleichzeitig hoher maximaler Dehnung,** und **niedrigem M100-Wert** erhalten werden.

Des Weiteren ist Gegenstand der Erfindung ein **Verfahren zur Herstellung** von Vulkanisaten aus HXNBR-Latex und die daraus hergestellten vulkanisierten **HXNBR-Latex-Formkörper.**

Es sei an dieser Stelle angemerkt, dass der Rahmen der Erfindung alle beliebigen und möglichen Kombinationen der oben stehenden und im Folgenden aufgeführten, allgemeinen oder in Vorzugsbereichen genannten Komponenten, Wertebereiche, Restedefinitionen bzw. Verfahrensparameter umfasst.

Der Begriff "**Copolymer**" umfasst Polymere mit mehr als einer Monomereinheit.

### (a) Hydrierter carboxylierter Nitrilkautschuk-Latex (HXNBR-Latex)

Bei den in der wässrigen Suspension enthaltenen **hydrierten carboxylierten Nitrilkautschuken** handelt es sich um solche mit Wiederholungseinheiten, die sich von mindestens einem konjugierten Dien, mindestens einem α,β-ungesättigten Nitril und mindestens einem weiteren carboxylgruppenhaltigen, copolymerisierbaren Termonomer ableiten, wobei die C=C Doppelbindungen des einpolymerisierten Dien-Monomers zu 50 bis 100 %, bevorzugt zu 80 bis 100 %, besonders bevorzugt zu 90 bis 100 % und insbesondere zu 93 bis 100 % hydriert sind.

### a,β-ethylenisch ungesättigtes Nitril

Als α,β-ethylenisch ungesättigtes Nitril, das die α,β-ethylenisch ungesättigten Nitrileinheiten bildet, kann jedes bekannte α,β-ethylenisch ungesättigte Nitril eingesetzt werden. Bevorzugt sind (C₃-C₅)-α,β-ethylenisch ungesättigte Nitrile wie Acrylnitril, α-Haloacrylnitril wie beispielsweise α-Chloracrylnitril und α-Bromacrylnitril, α-Alkylacrylnitril wie beispielsweise Methacrylnitril, Ethacrylnitril oder Mischungen aus zwei oder mehr α,β-ethylenisch ungesättigten Nitrilen. Besonders bevorzugt sind Acrylnitril, Methacrylnitril, Ethacrylnitril oder Mischungen daraus. Ganz besonders bevorzugt ist Acrylnitril.

Die **Menge an α,β-ethylenisch ungesättigten Nitrileinheiten** liegt typischerweise im Bereich von 0,1 bis 50 Gew.-%, bevorzugt 10 bis 45 Gew.-%, besonders bevorzugt von 20 bis 40 Gew.-% bezogen auf die Gesamtmenge an Monomereinheiten im hydrierten carboxylierten Nitrilkautschuk-Latex.

### Konjugiertes Dien

Das **konjugierte Dien**, das die konjugierten Dieneinheiten bildet, kann von jeder Natur sein, insbesondere konjugierte C₄-C₁₂-Diene. Besonders bevorzugt sind 1,3-Butadien, Isopren, 2,3-Dimethylbutadien, 1,3-Pentadien (Piperylen) oder Gemische daraus. Insbesondere bevorzugt sind 1,3-Butadien und Isopren oder Gemische daraus. Ganz besonders bevorzugt ist 1,3-Butadien.

Die **Menge an konjugiertem Dieneinheiten** liegt typischerweise im Bereich von 15 bis 90 Gew.-%, bevorzugt 20 bis 75 Gew.-% und besonders bevorzugt 25 bis 65 Gew.-%, bezogen auf die Gesamtmenge an Monomereinheiten im hydrierten carboxylierten Nitrilkautschuk-Latex.

### Carboxylgruppenhaltiges Termonomer

Unter **carboxylgruppenhaltigen Termonomeren**, welche die carboxylguppenhaltigen Monomereinheiten bilden, werden solche copolymerisierbaren Monomere verstanden, die entweder mindestens eine Carboxylgruppe im Monomermolekül aufweisen, oder die in-situ unter Freisetzung mindestens einer Carboxylgruppe reagieren können.

Als carboxylgruppenhaltige, copolymerisierbare Termonomere kommen z.B. α,β-ungesättigte Monocarbonsäuren, α,β-ungesättigte Dicarbonsäuren, deren Monoester oder die entsprechenden Anhydride in Betracht. Bevorzugte carboxylgruppenhaltige, copolymerisierbare Termonomere sind α,β-ungesättigte Monocarbonsäuren und α,β-ungesättigte Dicarbonsäuren sowie deren Monoester.

Als **α,β-ungesättigte Monocarbonsäuren** können bevorzugt Acrylsäure und Methacrylsäure eingesetzt werden. Einsetzbar sind auch **Hydroxyalkylacrylate** und Hydroxyalkylmethacrylat, in denen die C-Atom-Zahl der Hydroxyalkylgruppen 1-12 beträgt, vorzugsweise 2-Hydroxyethylacrylat, 2-Hydroxyethylmethacrylat und 3-Hydroxypropylacrylat. Einsetzbar sind ebenfalls Epoxidgruppen-haltige Ester wie beispielsweise Glycidylmethacrylat.

Geeignete copolymerisierbare carboxylgruppenhaltige Termonomere sind weiterhin PEG-Acrylate der allgemeinen Formel (I) 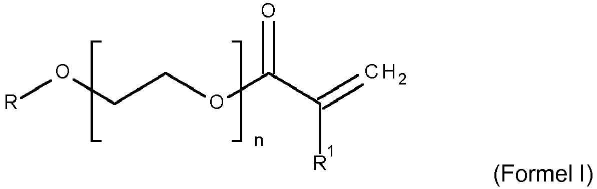 wobei **R gleich Wasserstoff**, ist, n gleich 1 bis 8, bevorzugt 2 bis 8, besonders bevorzugt 2 bis 5 und ganz besonders bevorzugt 3 ist und R¹ gleich Wasserstoff oder CH₃- ist. Der Begriff "(Meth)acrylat" steht im Rahmen dieser Erfindung für "Acrylat" und "Methacrylat". Wenn der Rest R¹ der allgemeinen Formel (I) CH₃- ist, so handelt es sich um ein Methacrylat. Der Begriff "Polyethylenglycol" bzw. die Abkürzung "PEG" steht im Rahmen dieser Erfindung sowohl für Monoethylenglycol-Abschnitte mit einer Ethylenglycol-Wiederholungseinheit (PEG-1; n gleich 1), als auch Polyethylenglycol-Abschnitte mit 2 bis 8 Ethylenglycol-Wiederholungeinheiten (PEG-2 bis PEG-8; n gleich 2 bis 8). Der Begriff "PEG-Acrylat" wird auch mit PEG-X-(M)A abgekürzt, wobei "X" für die Anzahl an Ethylenglycol-Wiederholungseinheiten steht, "MA" für Methacrylat steht und "A" für Acrylat steht. Acrylat-Einheiten, abgeleitet von PEG-Acrylaten der allgemeinen Formel (I) werden im Rahmen dieser Erfindung als "PEG-Acrylateinheit" bezeichnet. Diese PEG-Acrylate können kommerziell erworben werden, beispielsweise bei Arkema unter dem Handelsnamen Sartomer®, bei Evonik unter dem Handelsnamen Visiomer® oder bei Sigma Aldrich.

Als carboxylgruppenhaltige Termonomere können auch **α,β-ungesättigte Dicarbonsäuren,** bevorzugt Maleinsäure, Fumarsäure, Itaconsäure, Citraconsäure und Mesaconsäure, oder α,β-ungesättigte Dicarbonsäureanhydride, bevorzugt Maleinsäureanhydrid, Fumarsäureanhydrid, Itaconsäureanhydrid, Citraconsäureanhydrid und Mesaconsäureanhydrid eingesetzt werden.

Eingesetzt werden können ferner **Monoester von α,β-ungesättigten Dicarbonsäuren,** z.B. in Form der Alkyl-, bevorzugt C₁-C₁₀-Alkyl, insbesondere Ethyl-, n-Propyl-, iso-Propyl, n-Butyl-, tert.-Butyl, n-Pentyl- oder n-Hexyl-, Cycloalkyl-, bevorzugt C₅-C₁₂-Cycloalkyl-, besonders bevorzugt C₆-C₁₂₋Cycloalkyl, Alkylcycloalkyl-, bevorzugt C₆-C₁₂-Alkylcycloalkyl- , besonders bevorzugt C₇-C₁₀-Alkylcycloalkyl, Aryl-, bevorzugt C₆-C14-Aryl-Monoester.

Beispiele von **α,β-ungesättigten Dicarbonsäuremonoestern** umfassen
- Maleinsäuremonoalkylester, bevorzugt Monomethylmaleat, Monoethylmaleat, Monopropylmaleat und Mono-n-butylmaleat;
- Maleinsäuremonocycloalkylester, bevorzugt Monocyclopentylmaleat, Monocyclohexyl maleat und Monocycloheptylmaleat;
- Maleinsäuremonoalkylcycloalkylester, bevorzugt Monomethylcyclopentylmaleat und Monoethylcyclohexylmaleat;
- Maleinsäuremonoarylester, bevorzugt Monophenylmaleat;
- Maleinsäuremonobenzylester, bevorzugt Monobenzylmaleat;
- Fumarsäuremonoalkylester, bevorzugt Monomethylfumarat, Monoethylfumarat, Monopropylfumarat und Mono-n-butylfumarat;
- Fumarsäuremonocycloalkylester, bevorzugt Monocyclopentylfumarat, Monocyclohexylfumarat und Monocycloheptylfumarat;
- Fumarsäuremonoalkylcycloalkylester, bevorzugt Monomethylcyclopentylfumarat und Monoethylcyclohexylfumarat;
- Fumarsäuremonoarylester, bevorzugt Monophenylfumarat;
- Fumarsäuremonobenzylester, bevorzugt Monobenzylfumarat;
- Citraconsäuremonoalkylester, bevorzugt Monomethylcitraconat, Monoethylcitraconat, Monopropylcitraconat und Mono-n-butylcitraconat;
- Citraconsäuremonocycloalkylester, bevorzugt Monocyclopentylcitraconat, Monocyclohexylcitraconat und Monocycloheptylcitraconat;
- Citraconsäuremonoalkylcycloalkylester, bevorzugt Monomethylcyclopentylcitraconat und Monoethylcyclohexylcitraconat;
- Citraconsäuremonoarylester, bevorzugt Monophenylcitraconat;
- Citraconsäuremonobenzylester, bevorzugt Monobenzylcitraconat;
- Itaconsäuremonoalkylester, bevorzugt Monomethylitaconat, Monoethylitaconat, Monopropylitaconat und Mono-n-butyl itaconat;
- Itaconsäuremonocycloalkylester, bevorzugt Monocyclopentylitaconat, Monocyclohexylitaconat und Monocycloheptylitaconat;
- Itaconsäuremonoalkylcycloalkylester, bevorzugt Monomethylcyclopentylitaconat und Monoethylcyclohexylitaconat;
- Itaconsäuremonoarylester, bevorzugt Monophenylitaconat;
- Itaconsäuremonobenzylester, bevorzugt Monobenzylitaconat.
- Mesaconsäuremonoalkylester, bevorzugt Mesaconsäuremonoethylester.

Der Anteil der **carboxylgruppenhaltigen Termonomereinheiten** im hydrierten carboxylierten Nitrilkautschuk-Latex liegt im Bereich von 0,1 bis 30 Gew.-%, bevorzugt von 1 bis 20 Gew.-% und besonders bevorzugt von 2 bis 7 Gew.-%, bezogen auf die Gesamtmenge an Monomereinheiten im hydrierten carboxylierten Nitrilkautschuk-Latex.

### Weitere copolymerisierbare Monomere

Die HXNBR-Latices können neben dem α,β-ethylenisch ungesättigten Nitrileinheiten, den konjugierten Dieneinheiten und dem carboxylgruppenhaltigen Termonomeeinheiten auch noch ein oder mehrere weitere copolymerisierbare Monomere aufweisen.

Als weitere copolymerisierbare Monomere kommen beispielsweise Ester der **α,β-ungesättigten Monocarbonsäuren** in Betracht. Einsetzbare Ester der α,β-ungesättigten Monocarbonsäuren sind deren Alkylester und Alkoxyalkylester. Bevorzugt sind die Alkylester, insbesondere C₁-C₁₈ Alkylester der α,β-ungesättigten Monocarbonsäuren, Besonders bevorzugt sind Alkylester, insbesondere C₁-C₁₈ Alkylester der Acrylsäure oder der Methacrylsäure, insbesondere Methylacrylat, Ethylacrylat, Propylacrylat, n-Butylacrylat, tert.-Butylacrylat, 2-Ethylhexylacrylat, n-Dodecylacrylat, Methylmethacrylat, Ethylmethacrylate, Butylmethacrylat und 2-Ethylhexylmethacrylat. Bevorzugt sind auch Alkoxyalkylester der α,β-ungesättigten Monocarbonsäuren, besonders bevorzugt Alkoxyalkylester der Acrylsäure oder der Methacrylsäure, insbesondere C₂-C₁₂-Alkoxyalkylester der Acrylsäure oder der Methacrylsäure, ganz besonders bevorzugt Methoxymethylacrylat, Methoxyethyl(meth)acrylat, Ethoxyethyl(meth)acrylat und Methoxyethyl(meth)acrylat. Einsetzbar sind auch Mischungen von Alkylestern, wie z.B. den vorgenannten, mit Alkoxyalkylestern, z.B. in Form der vorgenannten. Einsetzbar sind auch Cyanoalkylacrylate und Cyanoalkylmethacrylate, mit 2-12 C-Atomen in der Cyanoalkylgruppe, vorzugsweise a-Cyanoethylacrylat, β-Cyanoethylacrylat und Cyanobutylmethacrylat. Einsetzbar sind auch Fluor-substituierte Benzylgruppenhaltige Acrylate oder Methacrylate, vorzugsweise Fluorobenzylacrylat, und Fluorobenzylmethacrylat. Einsetzbar sind auch Fluoroalkylgruppen haltige Acrylate und - Methacrylate, vorzugsweise Trifluoroethylacrylat und Tetrafluoropropylmethacrylat. Einsetzbar sind auch Aminogruppenhaltige α,β-ungesättigte Carbonsäureester wie Dimethylaminomethylacrylat und Diethylaminoethylacrylat.

Eingesetzt werden können ferner **Diester von α,β-ungesättigten Dicarbonsäuren**, z.B. in Form der Alkyl-, bevorzugt C₁-C₁₀-Alkyl, insbesondere Ethyl-, n-Propyl-, iso-Propyl, n-Butyl-, tert.-Butyl, n-Pentyl- oder n-Hexyl-, Cycloalkyl-, bevorzugt C₅-C₁₂-Cycloalkyl-, besonders bevorzugt C₆-C₁₂-Cycloalkyl, Alkylcycloalkyl-, bevorzugt C₆-C₁₂-Alkylcycloalkyl- , besonders bevorzugt C₇-C₁₀-Alkylcycloalkyl, Aryl-, bevorzugt C₆-C14-Aryl-, -Diester, wobei es sich jeweils auch um gemischte Ester handeln kann.

Beispiele von **α,β-ungesättigten Dicarbonsäurediestern** umfassen
- Maleinsäuredialkylester, bevorzugt Dimethylmaleat, Diethylmaleat, Dipropylmaleat und Di-n-butylmaleat;
- Maleinsäuredicycloalkylester, bevorzugt Dicyclopentylmaleat, Dicyclohexylmaleat und Dicycloheptylmaleat;
- Maleinsäuredialkylcycloalkylester, bevorzugt Dimethylcyclopentylmaleat und Diethylcyclohexylmaleat;
- Maleinsäurediarylester, bevorzugt Diphenylmaleat;
- Maleinsäuredibenzylester, bevorzugt Dibenzylmaleat;
- Fumarsäuredialkylester, bevorzugt Dimethylfumarat, Diethylfumarat, Dipropylfumarat und Di-n-butylfumarat;
- Fumarsäuredicycloalkylester, bevorzugt Dicyclopentylfumarat, Dicyclohexylfumarat und Dicycloheptylfumarat;
- Fumarsäuredialkylcycloalkylester, bevorzugt Dimethylcyclopentylfumarat und Diethylcyclohexylfumarat;
- Fumarsäurediarylester, bevorzugt Diphenylfumarat;
- Fumarsäuredibenzylester, bevorzugt Dibenzylfumarat;
- Citraconsäuredialkylester, bevorzugt Dimethylcitraconat, Diethylcitraconat, Dipropylcitraconat und Di-n-butylcitraconat;
- Citraconsäuredicycloalkylester, bevorzugt Dicyclopentylcitraconat, Dicyclohexylcitraconat und Dicycloheptylcitraconat;
- Citraconsäuredialkylcycloalkylester, bevorzugt Dimethylcyclopentylcitraconat und Diethylcyclohexylcitraconat;
- Citraconsäurediarylester, bevorzugt Diphenylcitraconat;
- Citraconsäuredibenzylester, bevorzugt Dibenzylcitraconat;
- Itaconsäuredialkylester, bevorzugt Dimethylitaconat, Diethylitaconat, Dipropylitaconat und Di-n-butyl itaconat;
- Itaconsäuredicycloalkylester, bevorzugt Dicyclopentylitaconat, Dicyclohexylitaconat und Dicycloheptylitaconat;
- Itaconsäuredialkylcycloalkylester, bevorzugt Dimethylcyclopentylitaconat und Diethylcyclohexylitaconat;
- Itaconsäurediarylester, bevorzugt Diphenylitaconat;
- Itaconsäuredibenzylester, bevorzugt Dibenzylitaconat und
- Mesaconsäuredialkylester, bevorzugt Mesaconsäurediethylester.

Geeignete weitere copolymerisierbare Monomere sind PEG-Acrylate der allgemeinen Formel (I) 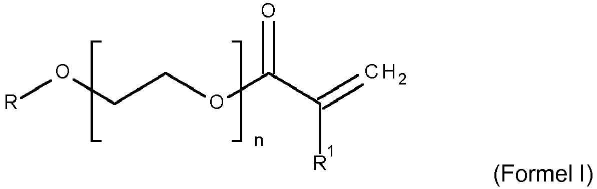 wobei **R gleich verzweigtes oder unverzweigtes C₁-C₂₀-Alkyl**, bevorzugt Methyl, Ethyl, Butyl oder Ethylhexyl, ist, n gleich 1 bis 8, bevorzugt 2 bis 8, besonders bevorzugt 2 bis 5 und ganz besonders bevorzugt 3 ist und R¹ gleich Wasserstoff oder CH₃- ist. Diese PEG-Acrylate können kommerziell erworben werden, beispielsweise bei Arkema unter dem Handelsnamen Sartomer®, bei Evonik unter dem Handelsnamen Visiomer® oder bei Sigma Aldrich.

Die **Menge der weiteren Monomereinheiten** liegt typischerweise im Bereich von 0 bis 50 Gew.-%, bevorzugt 0,1 bis 35 Gew.-% und besonders bevorzugt 1 bis 20 Gew.-%, bezogen auf die Gesamtmenge an Monomereinheiten im hydrierten carboxylierten Nitrilkautschuk-Latex.

Bevorzugte HXNBR-Latices sind hydrierte carboxylierte Nitrilkautschuk-Latices enthaltend Wiederholungseinheiten mindestens eines (C₃-C₅)-α,β-ungesättigten Nitrils, bevorzugt Acrylnitril, Methacrylnitril, Ethacrylnitril oder Mischungen davon, mindestens eines (C₄-C₆) konjugierten Diens, bevorzugt 1,3-Butadien, Isopren, 2,3-Dimethylbutadien, Piperylen oder Gemischen daraus und mindestens eines weiteren copolymerisierbaren carboxylgruppenhaltigen Termonomers ausgewählt aus der Gruppe bestehend aus α,β-ungesättigte Monocarbonsäuren, α,β-ungesättigte Dicarbonsäuren, deren Monoestern oder deren entsprechenden Anhydriden.

**Besonders bevorzugte HXNBR-Latices** sind solche hergestellt durch die Hydrierung von Copolymerisaten aus
Acrylnitril/Butadien/Acrylsäure, Acrylnitril/Butadien/Methacrylsäure, Acrylnitril/Butadien/Mono-n-butylmaleat, Acrylnitril/Butadien/Acrylsäure/Butylacrylat, Acrylnitril/Butadien/Methacrylsäure/Butylacrylat, Acrylnitril/Butadien/Mono-n-butylmaleat/Butylacrylat,
Acrylnitril/Butadien/Acrylsäure/Methoxyethylacrylat, Acrylnitril/Butadien/Methacrylsäure/Methoxyethylacrylat, Acrylnitril/Butadien/Mono-n-butylmaleat/Methoxyethylacrylat,
Acrylnitril/Butadien/Acrylsäure/PEG-Acrylat, Acrylnitril/Butadien/Methacrylsäure/PEG-Acrylat, Acrylnitril/Butadien/Mono-n-butylmaleat/PEG-Acrylat, Acrylnitril/Butadien/Acrylsäure/PEG-Acrylat/Butylacrylat, Acrylnitril/Butadien/Methacrylsäure/PEG-Acrylat/ Butylacrylat, und Acrylnitril/Butadien/Mono-n-butylmaleat/PEG-Acrylat/ Butylacrylat.

### Molekulargewicht

Der erfindungsgemäße hydrierte carboxylierte Nitrilkautschuk-Latex weist typischerweise ein Zahlenmittel des **Molekulargewichts (Mn)** von 10,000 g/mol bis 2,000,000 g/mol, bevorzugt 50,000 g/mol bis 1,000,000 g/mol, besonders bevorzugt 100,000 g/mol bis 500,000 g/mol und ganz besonders bevorzugt 150,000 g/mol bis 300,000 g/mol auf.

Die eingesetzten erfindungsgemäßen hydrierten carboxylierten Nitrilkautschuk-Latices besitzen typischerweise eine **Polydispersität PDI** = Mw/Mn, wobei Mw das Gewichtsmittel und Mn das Zahlenmittel des Molekulargewichts darstellt, im Bereich von 2,0 bis 6,0 und bevorzugt im Bereich von 2,0 bis 5,0.

### Hydriergrad

Es sei an dieser Stelle explizit festgehalten, dass es sich im Rahmen dieser Erfindung beim Begriff "HXNBR-Latex" um hydrierten carboxylierten Nitrilkautschuk-Latex handelt, bei dem die ursprünglich vorhandenen Doppelbindungen des konjugierten Diens zu mindestens 50 % hydriert sind, bevorzugt zu mindestens 80 %, besonders bevorzugt zu mindestens 90 % und ganz besonders bevorzugt zu mindestens 93 %.

Die im Rahmen dieser Erfindung beschriebenen HXNBR-Latices sind weiterhin hervorragend geeignet zur Verwendung in Klebstoffen und Batterien wie beispielsweise Lithium-Ionen-Batterien, bevorzugt als Binder in Elektroden, sowohl Anoden als auch Kathoden, von Lithium-Ionen-Batterien.

### Metathese

Es ist auch möglich, dass sich an die Herstellung des unhydrierten carboxylierten Nitrilkautschuk-Latex eine Metathese-Reaktion zur Reduktion des Molekulargewichts des unhydrierten carboxylierten Nitrilkautschuk-Latex anschließt. Diese Metathesereaktionen sind bei dem Fachmann hinlänglich bekannt und in der Literatur beschrieben. Die Metathese ist beispielsweise aus WO-A-02/100941 sowie der WO-A-02/100905 bekannt und kann zum Molekulargewichtsabbau eingesetzt werden.

### Weiterer Latex

Neben dem hydrierten carboxylierten Nitrilkautschuk-Latex können noch weitere Latices in der Tauchformungslatex-Zusammensetzung vorliegen. Als weitere Latices sind Naturkautschuk, Isopren-Latex, Vinylpyridin-Latex, Chlorsulfonyl-Polyethylen-Kautschuk-(CSM)-Latex, NBR-Latex und XNBR-Latex geeignet. XNBR-Latices sind kommerziell erhältlich, beispielsweise bei Synthomer (beispielsweise Synthomer 426D, X1138 oder X115).

### Verfahren zur Herstellung von HXNBR-Latex

HXNBR-Latices lassen sich über dem Fachmann aus dem Stand der Technik bekannte Methoden synthetisieren, d.h. üblicherweise über eine **Emulsionspolymerisation** der entsprechenden zuvor genannten Monomere zum unhydrierten carboxylierten Nitrilkautschuk-Latex (XNBR-Latex) und eine anschließende homogen oder auch heterogen katalysierte **Hydrierung** des wässrigen unhydrierten carboxylierten Nitrilkautschuk-Latex.

**Verfahren zur Herstellung** von XNBR sind dem Fachmann bekannt, z.B. aus W. Hofmann, Rubber Chem. Technol. 36 (1963) 1 und Ullmann's Encyclopedia of Industrial Chemistry, VCH Verlagsgesellschaft, Weinheim, 1993, S.255-261.

### Hydrierung des XNBR-Latex

Die direkte Hydrierung von carboxyliertem Nitrilkautschuk-Latex ist aus dem Stand der Technik bekannt. Dieses Verfahren wird beispielsweise beschrieben in US-A-5,208,296**,** US-A-5,210,151 und US-A-5,783,625**.** Typische Reaktionsbedingungen sind eine Reaktionstemperatur von 80 bis 160 °C, ein Wasserstoffdruck von 30 bis 80 bar, ein Übergangsmetallkatalysator der Gruppe 8, 9 oder 10 sowie gegebenenfalls ein organisches Lösungsmittel um den Katalysator in den wässrigen Latex einzutragen.

**Alternativ** kann ein hydrierter Nitrilkautschuk als Sekundärlatex mittels Lösung eines HXNBR-**Festkautschukes** in einem geeigneten Lösungsmittel mit anschließender Dispersionsbildung durch Wasserzugabe, wie beispielsweise in EP-A-2 325 238 beschrieben, hergestellt werden.

Die **Hydrierung** von carboxylierten unhydrierten Nitrilkautschuken in organischen Lösungsmitteln ist bekannt, beispielsweise aus US-A-3 700 637**,** DE-A-2 539 132**,** DE-A-3 046 008**,** DE-A-3 046 251**,** DE-A-3 227 650**,** DE-A-3 329 974**,** EP-A-0 111 412**,** FR-B 2 540 503**.** Hydrierte carboxylierte Nitrilkautschuke zeichnen sich durch hohe Reißfestigkeit, geringen Abrieb, niedrige bleibende Verformung nach Druck- und Zugbeanspruchung und gute Ölbeständigkeit, vor allem aber durch bemerkenswerte Stabilität gegen thermische und oxidative Einflüsse aus.

Im Übrigen sind hydrierte carboxylierte Nitrilkautschuke als Festkautschuke auch käuflich erhältlich, z.B. unter dem Handelsnamen **Therban® XT** von ARLANXEO Deutschland GmbH.

HXNBR-Latex ist außerdem kommerziell erhältlich bei Zeon unter dem Handelsnamen Zetpol 2230LX.

### (b) Polyfunktionales Epoxid

Polyfunktionale Epoxide sind im Rahmen dieser Erfindung Verbindungen die zwei oder mehr Epoxidgruppen aufweisen.

In einer bevorzugten Ausführungsform handelt es sich beim polyfunktionalen Epoxid um ein difunktionales Epoxid mit zwei Epoxidgruppen oder ein trifunktionales Epoxid mit drei Epoxidgruppen. In einer besonders bevorzugten Ausführungsform handelt es sich um ein polyfunktionales Epoxid mit zwei Epoxidgruppen.

Geeignete polyfunktionale Epoxide sind Bisphenol-A-Epoxid-Harz, Bisphenol-F-Epoxid-Harz, Novolak-Epoxid-Harze, Biphenyl-basierte Epoxid Harze, aliphatische Epoxid-Harze und langkettige aliphatische Epoxid-Harze.

Ein bevorzugtes polyfunktionales Epoxid mit zwei Epoxidgruppen ist ein Bisphenol-A-Epichlorhydrin-Epoxid-Harz welches unter dem Handelsnamen Eudermfix GA als Dispersion bei LANXESS kommerziell erhältlich ist.

Ein bevorzugtes polyfunktionales Epoxid mit drei Epoxidgruppen ist 1,3-Propandiol-2-ethyl-2-(hydroxymethyl)-polymer mit 2-(Cholormethyl)oxiran welches unter dem Handelsnamen Eudermfix EP als Dispersion bei LANXESS kommerziell erhältlich ist.

Das polyfunktionale Epoxid liegt in der erfindungsgemäßen vulkanisierbaren Zusammensetzung typischerweise in einer **Menge** von 0,1 bis 50 Gew.-Teilen, bevorzugt 0,5 bis 10 Gew.-Teilen und besonders bevorzugt 1 bis 3 Gew.-Teilen bezogen auf 100 Gew.-Teile des HXNBR-Latex-Feststoffes vor.

### (c) Mittel zur Einstellung des pH-Wertes (pH adjuster)

Als Mittel (c) zur Einstellung des pH-Wertes der erfindungsgemäßen Tauchformungslatex-Zusammensetzungen können anorganische oder organische Säuren oder Basen zugesetzt werden, beispielsweise Kaliumhydroxid (KOH), Natriumhydroxid (NaOH), Ammoniak oder Amine wie Triethylamin. Bevorzugt werden anorganische Basen, besonders bevorzugt Alkalimetallhydroxide, ganz besonders bevorzugt KOH und NaOH zur Einstellung des pH-Wertes der Tauchformungslatex-Zusammensetzungen eingesetzt.

Das Mittel zur Einstellung des pH-Wertes der erfindungsgemäßen Zusammensetzung liegt in der erfindungsgemäßen Zusammensetzung typischerweise in einer **Menge** von 0 bis 10 Gew.-Teilen, bevorzugt 0,1 bis 5 Gew.-Teilen bezogen auf 100 Gew.-Teile des HXNBR-Latex-Feststoffes vor.

Der **pH-Wert** der erfindungsgemäßen vulkanisierbaren Zusammensetzung ist üblicherweise größer gleich 4, bevorzugt größer gleich 7 und ganz besonders bevorzugt größer gleich 9. Weiterhin ist der pH-Wert der erfindungsgemäßen vulkanisierbaren Zusammensetzungen kleiner gleich 14, bevorzugt kleiner gleich 13 und besonders bevorzugt kleiner gleich 12. Somit liegt der pH-Wert der erfindungsgemäßen vulkanisierbaren Zusammensetzungen üblicherweise im Bereich von 4 bis 14, bevorzugt 7 bis 12, besonders bevorzugt 9 bis 12. Die Messung des pH-Wertes erfolgt mittels herkömmlichen, dem Fachmann bekannten Methoden.

In einer typischen erfindungsgemäßen Ausführungsform enthält die **erfindungsgemäße Zusammensetzung**
(a) 100 Gew.-Teile HXNBR-Latex-Feststoff,
(b) 0,1 bis 50 Gew.-Teile, bevorzugt 0,5 bis 10 Gew.-Teile, besonders bevorzugt 1 bis 3 Gew.-Teile polyfunktionales Epoxid und
(c) 0 bis 10 Gew.-Teile eines Mittels zur Einstellung des pH-Wertes,
wobei die Zusammensetzung einen pH Wert von 9 bis weniger als 11 aufweist.

In einer **bevorzugten** Ausführungsform enthält die erfindungsgemäße Zusammensetzung
(a) 100 Gew.-Teile HXNBR-Latex-Feststoff,
(b) 0,1 bis 50 Gew.-Teile, bevorzugt 0,5 bis 10 Gew.-Teile, besonders bevorzugt 1 bis 3 Gew.-Teile di- oder trifunktionales Epoxid und
(c) 0 bis 10 Gew.-Teile eines Mittels zur Einstellung des pH-Wertes
wobei die Zusammensetzung einen pH Wert von 9 bis 10,5 aufweist.

In einer **weiter bevorzugten Ausführungsform** enthält die erfindungsgemäße Zusammensetzung
(a) 100 Gew.-Teile HXNBR-Latex-Feststoff, wobei der HXNBR-Latex 20 bis 40 Gew.-% Acrylnitrileinheiten und 1 bis 10 Gew.-% carboxylgruppenhaltige Termonomereinheiten aufweist,
(b) 0,1 bis 50 Gew.-Teile difunktionales Epoxid und
(c) 0,1 bis 5 Gew.-Teile eines Mittels zur Einstellung des pH-Wertes,
wobei die Zusammensetzung einen pH-Wert von 9 bis 10,5 aufweist.

Die erfindungsgemäße vulkanisierbare Zusammensetzung besitzt typischerweise eine **Feststoffkonzentration** von 5 bis 65 Gew.-%, bevorzugt von 10 bis 60 Gew.-%, besonders bevorzugt von 15 bis 55 Gew.-% und ganz besonders bevorzugt von 20 bis 40 Gew.-% bezogen auf die Gesamtmenge der vulkanisierbaren Zusammensetzung.

### Weitere Vulkanisationsmittel

Als weitere Vulkanisationsmittel neben dem polyfunktionalen Epoxid (b) können prinzipiell alle üblicherweise in Tauchformungsverfahren verwendeten Vulkanisationsmittel eingesetzt werden. Beispiele für geeignete weitere Vulkanisationsmittel sind Polyamine wie beispielsweise Hexamethylendiamin, Triethylentetraamin und Tetraethylenpentaamin.

Zusätzlich zur Epoxidvernetzung mit polyfunktionalem Epoxid können ionische Bindungen durch Zugabe von Metallsalzen wie z.B. ZnO erhalten werden.

Die Menge an weiteren Vulkanisationsmittel beträgt typischerweise 0 bis 10 Gew.-Teile, bevorzugt 0 bis 5 Gew.-Teile bezogen auf 100 Gew.-Teile des HXNBR-Latex-Feststoffes. In einer ganz besonders bevorzugten Ausführungsform enthält die erfindungsgemäße Zusammensetzung neben dem polyfunktionalen Epoxid keine weiteren Vernetzungsmittel, da diese zu einem unterschiedlichen Vernetzungsverhalten und inhomogenen Vulkanisateigenschaften führen können.

### Vulkanisationsbeschleuniger

Als Vulkanisationsbeschleuniger können alle üblicherweise in Tauchformungsverfahren verwendeten Vulkanisationsbeschleuniger eingesetzt werden. Beispiele für geeignete Vulkanisationsbeschleuniger sind Dithiocarbaminsäure wie beispielsweise Diethyldithiocarbaminsäure, Dibutyldithiocarbaminsäure, Di-2-ethylhexyldithiocarbaminsäure, Dicyclohexyldithiocarbaminsäure, Diphenyldithiocarbaminsäure und Dibenzyldithiocarbaminsäure sowie deren Zinksalze wie beispielsweise Zinkdibutyldithiocarbamat (ZDBC), 2-Mercaptobenzothiazol, Zinksalze von 2-Mercaptobenzothiazol, 2-Mercaptobenzothiazolin, Dibenzothiazylsulfid, 2-(2,4-Dinitrophenylthio)benzothiazol, 2-(N,N-diethylthiocarbacylthio)benzothiazol, 2-(2,6-Dimethyl-4-morpholinothio)benzothiazol, 2-(4'-Morpholindithio)benzothiazol, 4-Morphonylyl-2-benzothiazyldisulfid und 1,3-bis(2-Benzothiazyl-mercaptomethyl)urea. Bevorzugte Vulkanisationsbeschleuniger sind Zinkdibutyldithiocarbamat (ZDBC), 2-Mercaptobenzothiazol und Zinksalze von 2-Mercaptobenzothiazol. Vulkanisationsbeschleuniger können entweder alleine oder in Kombination eingesetzt werden.

### Menge an Vulkanisationsbeschleuniger

Die Menge an Vulkanisationsbeschleuniger beträgt bevorzugt 0 bis 10 Gew.-Teile, besonders bevorzugt 0 bis 5 Gew.-Teile und ganz besonders bevorzugt 0 bis 3 Gew.-Teile bezogen auf 100 Gew.-Teile des HXNBR-Latex-Feststoffes.

### Additive

Die erfindungsgemäße Zusammensetzung kann typischerweise zusätzlich ein oder mehrere Verdickungsmittel, Antioxidatien, Alterungsschutzmittel, Dispersionsmittel, Pigmente wie beispielsweise Titandioxid (TiO₂), Füllstoffe und Weichmacher enthalten.

Geeignete **Vulkanisationsbedingungen** für die Herstellung von Vulkanisaten sind dem Fachmann hinlänglich bekannt.

### Vulkanisate und Formkörper

Gegenstand der Erfindung sind ferne **Vulkanisate** und daraus geformte **Formkörper**, hergestellt aus erfindungsgemäßen Zusammensetzungen enthaltend HXNBR-Latex und polyfunktionales Epoxid. Bevorzugt sind **Tauchformungsartikel.** Das **Tauchverfahren** zur Herstellung von Tauchformungsartikeln, insbesondere von Handschuhen, ist im Stand der Technik bereits ausführlich beschrieben. Üblicherweise umfasst es zumindest folgende Schritte: Bereitstellen einer Tauchform, Aufbringen eines Koagulationsmittel und Aufbringen eines Latex. Daneben umfasst dieses Tauchverfahren diverse Waschund Trockenschritte. Üblicherweise wird dieses Tauchverfahren kontinuierlich durchgeführt, beispielsweise in einer sogenannten Kettentauchanlage. Für weitere Einzelheiten dazu sei auf den einschlägigen Stand der Technik verwiesen.

Als **Koagulationsmittel** werden typischerweise Metallhalogenide wie beispielsweise Bariumchlorid, Calciumchlorid, Magnesiumchlorid oder Aluminiumchlorid, Nitrate wie beispielsweise Bariumnitrat, Calciumnitrat oder Zinknitrat, Acetate wie beispielsweise Bariumacetat, Calciumacetat oder Zinkacetat oder Sulfate wie beispielsweise Calciumsulfat Magnesiumsulfat oder Aluminiumsulfat verwendet. Bevorzugt werden die Calciumsalze CaCl₂ oder Ca(NO₃)₂ eingesetzt.

Das Koagulationsmittel wird typischerweise in wässriger und/oder alkoholischer Lösung eingesetzt. Die Konzentration des Koagulationsmittels beträgt typischerweise 5 bis 70 Gew.-%, bevorzugt 20 bis 50 Gew.-% bezogen auf die Gesamtmenge der Koagulationslösung.

Zusätzlich können Tenside (sogenannte wetting agents) wie Polyoxyethyleneoctyl phenylether (Triton X-100) in der Koagulationslösung verwendet werden.

Typischerweise wird zunächst eine Tauchform aus Porzellan, Keramik oder Glas bereitgestellt. Auf diese wird in einem ersten Tauchschritt das Koagulationsmittel aufgebracht. Dazu wird die Tauchform für einen Zeitraum von einer Sekunde bis 60 Minuten in eine Koagulationslösung enthaltend Koagulationsmittel und optional wetting agent getaucht und anschließend getrocknet. Die Trocknung kann bei Raumtemperatur oder bei erhöhter Temperatur erfolgen.

In einem zweiten Tauchschritt wird der Latex aufgebracht. Die **Dauer** des Tauchschrittes kann beliebig lange erfolgen. Der Tauchschritt dauert typischerweise eine Sekunde bis 60 Minuten. In einer bevorzugten Ausführung beträgt die Dauer des Tauchschrittes 1 bis 5 Minuten, bevorzugt 2 bis 4 Minuten, besonders bevorzugt 2,5 bis 3,5 Minuten. Tauchgeformte Formkörper mit einer Tauchdauer von 2,5 bis 3,5 Minuten weisen eine erhöhte Zugfestigkeit auf.

Anschließend wird der koagulierte Latexfilm getrocknet. Die Trocknung kann bei Raumtemperatur oder bei erhöhter Temperatur erfolgen. Um überschüssiges Material oder Verunreinigungen zu entfernen kann bei Bedarf eine Wäsche erfolgen. Dazu wird der koagulierte Latexfilm in ein Wasserbad getaucht, welches typischerweise eine Temperatur von 10 bis 50 °C aufweist. Die Tauchzeit für die Wäsche beträgt üblicherweise eine Sekunde bis 60 Minuten, bevorzugt 1 bis 5 Minuten.

Anschließend erfolgt die Trocknung des koagulierten Latexfilms bei Raumtemperatur oder erhöhter Temperatur.

Die auf das Tauchverfahren folgende Vulkanisation kann bei beliebiger **Temperatur** erfolgen. Typischerweise erfolgt die Vulkanisation des aufgetragenen Films bei Temperaturen von 90 °C bis 200 °C, bevorzugt 120 °C bis 190 °C und besonders bevorzugt bei 170 °C bis 190 °C.

Typischerweise erfolgt die Vulkanisation in einem Trockner. Die Dauer der Vulkanisation ist abhängig von dem Kautschuk und dem verwendetem Vernetzungssystem und beträgt typischerweise 1 bis 60 Minuten, bevorzugt 10 bis 20 Minuten.

Gegenstand der Erfindung sind ferner **Vulkanisate von hydriertem carboxylierten Nitrilkautschuk-Latex**, bevorzugt Tauchformungsartikel oder Beschichtungen, besonders bevorzugt Handschuhe, hergestellt durch die Vulkanisation der erfindungsgemäßen vulkanisierbaren Zusammensetzungen.

Gegenstand der Erfindung ist ferner ein **beschichtetes Trägermaterial** welches mit der erfindungsgemäßen vulkanisierbaren Zusammensetzung beschichtet wurde. Hierfür wird das Trägermaterial in eine erfindungsgemäße Tauchformungslatex-Zusammensetzung getaucht, die HXNBR-Latex (a) und polyfunktionales Epoxid (b) als Vernetzungsmittel enthält.

Gegenstand der Erfindung ist weiterhin ein **Verfahren zur Herstellung von Verbundwerkstoffen**, welches dadurch gekennzeichnet ist, dass das beschichtete Trägermaterial in einen oder mehrere weitere Kautschuken sowie Hilfsmittel eingebettet und vulkanisiert wird, wobei die Kautschuke bevorzugt ausgewählt sind aus der Gruppe bestehend aus NR, BR, SBR, EPM, EPDM, ECO, CR, EVM, CSM, ACM, VMQ, FKM, NBR, HNBR und Mischungen und es sich bei den Hilfsmittel bevorzugt um Füllstoffe, Vernetzungsmittel und Vernetzungsbeschleuniger handelt.

Die Verbundwerkstoffe finden Verwendung in den verschiedensten **Einsatzfeldern**, bevorzugt als verstärkte Artikel aller Art, besonders bevorzugt als faserverstärkte Artikel aller Art, insbesondere als Riemen aller Art, Membranen, Bälge, Luftfedern, Gummimuskeln und Schläuche.

Die Erfindung betrifft weiterhin die **Verwendung** von polyfunktionalen Epoxiden als Vernetzungsmittel für HXNBR-Latex.

Die Erfindung betrifft weiterhin die **Verwendung** der erfindungsgemäßen Zusammensetzungen enthaltend hydriertem, carboxylierten Nitrilkautschuk-Latex und polyfunktionales Epoxid zur Herstellung von Vulkanisaten von hydriertem, carboxylierten Nitrilkautschuk-Latex, bevorzugt zur Herstellung von Tauchformungsartikeln oder Beschichtungen, besonders bevorzugt zur Herstellung von Handschuhen.

Der **Vorteil** der Erfindung liegt insbesondere darin, das Vulkanisate, hergestellt durch die Vulkanisation von hydriertem, carboxylierten Nitrilkautschuk-Latex und polyfunktionalem Epoxid, einen niedrigen M100-Wert bei gleichzeitig hoher Dehnung und Zugfestigkeit aufweisen.

### Beispiele

### Eingesetzte Materialien

**Latex (a)**

| | |
|---|---|
| Therban® XT-Latex | hydrierter carboxylierter NBR-Sekundärlatex; pH=8,7; 40 Gew.-% Feststoff; 33 Gew.-% Acrylnitril; 5 Gew.-% Methacrylsäure; kommerziell erhältlich bei ARLANXEO |

**Vernetzungsmittel (b)**

| | |
|---|---|
| Polyfunktionales Epoxid | EUDERM Fix GA-I (Bisphenol-A-Epichlorhydrin-Epoxidharz mit durchschnittlichem Molekulargewicht <700); erhältlich bei LANXESS |
| Resorcinol | erhältlich bei VWR Chemicals, 99,1% |
| Formaldehyd | erhältlich bei VWR Chemicals, 36% |
| Schwefel | 50% Kolloidschwefel-Dispersion; erhältlich bei agrostulln GmbH |

**Hilfsmittel**

| | |
|---|---|
| ZDBC | Vulkanisationsbeschleuniger; Zinkdibutyldithiocarbamat-Dispersion; erhältlich bei Aquaspersions, 50% |
| ZnO | Zinkoxid; erhältlich bei Aquaspersions, 50% |

**Koagulationslösung**

| | |
|---|---|
| Ca(NO₃)₂*4 H₂O | Calciumnitrat Tetrahydrat; erhältlich bei VWR |
| Triton X-100 | Tensid; erhältlich bei Merck |

**pH-Adjuster**

| | |
|---|---|
| NaOH | Natriumhydroxid; erhältlich bei Merck, 99% |
| KOH | Kaliumhydroxid; erhältlich bei VWR |
| NH₄OH | Ammoniak-Lösung; erhältlich bei Merck, 28-30% |

### Messung der Zugfestigkeit und Dehnung

Die Messung der Zugfestigkeiten wurden in einer Zugmaschine von Zwick/Roell (Modell Z005, Kraftaufnehmer XForce HP) durchgeführt. Dazu wurden aus dem erhaltenen Latexfilm vier S2-Zugstäbe (nach DIN 53504:2009-10, angepasst an ISO37-2005) ausgestanzt und in die Backen der Zugmaschine eingespannt. Anschließend wurde mit einer definierten Geschwindigkeit die Backen auseinandergezogen, und Kraft und Weg aufgezeichnet. Als Fₘₐₓ wird die Kraft bestimmt, bei der die Probe reißt. Es wird der Median über alle vier Zugprüfungen angegeben. Die Kraft wird auf die Breite (4 mm) und die gemessene Schichtdicke des Zugstabes bezogen und in MPa angegeben.

### Messung der M100

M100 ist ein Maß für den Tragekomfort und die Steifheit von Formkörpern, beispielsweise von Handschuhen. Je niedriger der M100-Wert ist, umso angenehmer ist der Tragekomfort. Als M100 wird diejenige Kraft aus der Zugprüfung verwendet, bei der der S2-Stab 100% gedehnt wurde. Es wird der Median über alle vier Zugprüfungen angegeben. Die Kraft wird auf die Breite (4 mm) und die gemessene Schichtdicke des Zugstabes bezogen und in MPa angegeben.

### Durchführung der Tauchversuche

Glasplatten (10 x 14 cm) wurden zuerst in eine Koagulationslösung getaucht. Die Koagulationslösung enthielt 22 Gew.-% Calciumnitrat (Ca(NO₃)₂), 0,025 Gew.-% Triton X-100 und Tensid. In einer Glaskammer wurde die Tauchformungslatex-Zusammensetzung vorbereitet. Die Glasplatten wurden anschließend einmal für 3 Minuten in die Tauchformungslatex-Zusammensetzung getaucht. Die dadurch hergestellten Filme wurden für 3 Minuten bei 25 °C getrocknet und anschließend in einem 40 °C warmen Wasserbad 3 Minuten gewaschen. Nach erneuter Trocknung für 10 Minuten bei 130°C wurden die erhaltenen Filme für 10 Minuten bei erhöhten Temperaturen in einem Ofen vulkanisiert. Die erhaltenen Latexfilme wurden vorsichtig von der Form gelöst und die Schichtdicke gemessen. Die Schichtdicken der so hergestellten Filme lagen zwischen 0,19 und 0,42 mm.

### 1. Epoxid-Vernetzer (erfindungsgemäß):

### Herstellung der Tauchformungslatex-Zusammensetzung

Der HXNBR-Latex (a) wurde in einem Becherglas vorgelegt. Unter Rühren wurde die entsprechende Menge Epoxid (b) zugegeben. Dabei ist zu beachten, dass sich die angegebenen Mengen Vernetzer auf die Masse des in der gesamten Tauchformungslatex-Zusammensetzung enthaltenen Vernetzers beziehen sowie auf den in der Tauchformungslatex-Zusammensetzung dispergierten HXNBR-Feststoff. Anschließend wurde mit verdünnter KOH (10 Gew.-%) auf den gewünschten pH-Wert angepasst. Die Tauchformungslatex-Zusammensetzungen wurden anschließend mit deionisiertem Wasser auf einen Feststoffgehalt von 35 % eingestellt.

**Tabelle 1. Einfluss des pH-Wertes der Tauchformungslatex-Zusammensetzung auf die Eigenschaften der Tauchformungsartikel aus HXNBR-Latex mit Epoxid als Vernetzungssystem**

| | **V1** | **V2** | **V3** | **V4** | **V5** |
|---|---|---|---|---|---|
| **(a) HXNBR-Latex-Feststoff [Gew.-Teile]** | 100 | 100 | 100 | 100 | 100 |
| **(b) Euderm GA [Gew.-Teile]** | 3 | 3 | 3 | 3 | 3 |
| **pH-Wert** | 9 | 9,5 | 10 | 10,5 | 11 |
| **Feststoffgehalt [%]** | 35 | 35 | 35 | 35 | 35 |
| **Fₘₐₓ [MPa]** | 9 | 10 | 13 | 17 | 23 |
| **M100 [MPa]** | 1,00 | 1,09 | 1,28 | 1,80 | 3,14 |
| **Dehnung [%]** | 681 | 619 | 505 | 407 | 331 |

| | | | | | |
|---|---|---|---|---|---|
| Vulkanisationsdauer: 10 Minuten; Vulkanisationstemperatur: 180 °C; | | | | | |

Die Vulkanisation und somit die Eigenschaften der vulkanisierten HXNBR-Latices, d.h. der hergestellten Tauchformungsartikel sind abhängig vom pH-Wert der Tauchformungslatex-Zusammensetzung. Mit sinkendem pH-Wert wird die Tauchformungs-Zusammensetzung gelblich bis bräunlich. Mit steigendem pH-Wert nimmt die Viskosität der Formulierung zu.

Tauchformungsartikel die aus Tauchformungslatex-Zusammensetzungen mit einem pH-Wert von 9 bis 10,5 hergestellt werden, weisen einen außergewöhnlich niedrigen und somit vorteilhaften M100 Wert von kleiner 2,0 MPa auf.

**Tabelle 2. Einfluss der Vulkanisationstemperatur auf die Eigenschaften der Tauchformungsartikel aus HXNBR-Latex mit polyfunktionalem Epoxid als Vernetzungssystem**

| Die vulkanisierbaren Zusammensetzungen des Versuches V4 wurden bei unterschiedlichen Vulkanisationstemperaturen und anschließend die Zugfestigkeit bestimmt. | | |
|---|---|---|
| | **V4.1** | **V4.2** |
| **Vulkanisationstemperatur [°C]** | 150 | 170 |
| **Fₘₐₓ [MPa]** | 10 | 13 |

| | | |
|---|---|---|
| Vulkanisationsdauer: 10 Minuten | | |

Vulkanisate, die bei einer erhöhten Vulkanisationstemperatur oberhalb 170 °C vernetzt wurden, weisen ausgezeichnete Zugfestigkeiten auf (siehe auch V4 in Tabelle 1).

**Tabelle 3. Einfluss der Vernetzermenge auf die Eigenschaften der Tauchformungsartikel aus HXNBR-Latex mit polyfunktionalem Epoxid als Vernetzungssystem**

| | **V6** | **V4** | **V5** | **V7** | **V8** | **V9** |
|---|---|---|---|---|---|---|
| **(a) HXNBR-Latex-Feststoff [Gew.-Teile]** | 100 | 100 | 100 | 100 | 100 | 100 |
| **(b) Euderm GA [Gew.-Teile]** | 1 | 3 | 3 | 5 | 5 | 10 |
| **pH-Wert** | 11 | 10,5 | 11 | 10,5 | 11 | 11 |
| **Feststoffgehalt [%]** | 35 | 35 | 35 | 35 | 35 | 35 |
| **Fₘₐₓ [MPa]** | 19 | 17 | 23 | 17,5 | 24 | 19 |

| | | | | | | |
|---|---|---|---|---|---|---|
| Vulkanisationsdauer: 10 Minuten; Vulkanisationstemperatur: 180 °C | | | | | | |

Bei hohen pH-Werten von 10,5 bis 11 führte die Zugabe von 5 Gew.-Teilen polyfunktionalem Epoxid bezogen auf 100 Gew.-Teile HXNBR-Latex-Feststoff zu einer geringfügigen Verbesserung der Zugfestigkeit. Bei erhöhten Anteilen polyfunktionalen Epoxids kann eine Reduktion der Zugfestigkeit beobachtet werden.

### 2. RFL-Vernetzer (nicht erfindungsgemäß)

Resorcinol und Formaldehyd werden in Wasser im Basischen bei Raumtemperatur über Nacht zum Premix vorkondensiert.

**Tabelle 4. Premix Zusammensetzung**

| **Premix** | **Vergleichsversuch 1 [Gew.-Teile]** | **Vergleichsversuch 2* [Gew.-Teile]** |
|---|---|---|
| **Resorcinol** | 11,0 | 11,0 |
| **Formaldehyd (37%ige Lösung)** | 16,2 | 8,1 |
| **deionisiertes Wasser** | 235,8 | 194 |
| **NaOH (10%ige Lösung)** | 3,0 | 3,0 |

Danach wird die Tauchformungslatex-Zusammensetzung vorbereitet indem zum HXNBR-Latex Premix und weitere Substanzen (NH₄OH) zugegeben werden.

**Tabelle 5. Tauchformungslatex-Zusammensetzung**

| **Tauchformungslatex-Zusammensetzung** | **Vergleichsversuch VV1 [Gew.-Teile]** | **Vergleichsversuch VV2 [Gew.-Teile]** |
|---|---|---|
| **HXNBR-Latex** | 244^{a} | 60,9^{b} |
| **Premix** | 266 | 27,7 |
| **Wasser** | 60 | 11,4 |
| **NH₄OH (28%ige Lösung)** | 11 | 0 |

| | | |
|---|---|---|
| = 41 %ige Lösung; = 30%ige Lösung | | |

Die RFL Formulierung wurde analog der erfindungsgemäßen Epoxid-haltigen Tauchformungslatex-Zusammensetzungen getaucht. Mit der Tauchformungslatex-Zusammensetzung aus Vergleichsversuch 1 konnten keine Filme erhalten werden. Nach der Trocknung wurde ein starker Schrumpf, sowie große Risse beobachtet, sodass aus den Filmen keine geeigneten Probekörper für einen Zugversuch gestanzt werden konnten.

Mit der Tauchformungslatex-Zusammensetzung aus Vergleichsversuch 2 konnten bei gleicher Vorgehensweise wie bei den Epoxid-haltigen Tauchformungslatex-Zusammensetzungen Filme erhalten werden, aus denen Zugprüfkörper ausgestanzt werden konnten.

**Tabelle 6. Einfluss der Vulkanisationstemperatur auf die Eigenschaften der Tauchformungsartikel aus HXNBR-Latex mit RFL als Vernetzungssystem**

| | **VV2.1** | **VV2.2** |
|---|---|---|
| **Vulkanisationstemperatur [°C]** | 120 | 170 |
| **Fₘₐₓ [MPa]** | 17,5 | 21,4 |
| **M100 [MPa]** | 4,1 | 4,2 |
| **Dehnung [%]** | 506 | 494 |

Während die Vulkanisate eine gute Zugfestigkeit bei hoher Dehnung aufweisen, sind die erhaltenen M100 Werte zu hoch um für Handschuhe verwendet zu werden.

### 3. Schwefel/ZnO-Vernetzer (nicht erfindungsgemäß)

Der HXNBR-Latex wurde in einem Becherglas vorgelegt. Unter Rühren wurde die entsprechende Menge Schwefel, ZnO und ZDBC zugegeben. Dabei ist zu beachten, dass sich die angegebenen Mengen Vernetzer auf die Masse des in der gesamten Tauchformungslatex-Zusammensetzung enthaltenen Vernetzers beziehen sowie auf den in der Tauchformungslatex-Zusammensetzung dispergierten HXNBR-Feststoff. Anschließend wurde mit verdünnter KOH (10 Gew.-%) auf den gewünschten pH-Wert angepasst. Die Tauchformungslatex-Zusammensetzungen wurden anschließend mit deionisiertem Wasser auf einen Feststoffgehalt von 35 % eingestellt.

**Tabelle 7. Eigenschaften der Tauchformungsartikel aus HXNBR-Latex mit Schwefel/ZnO als Vernetzungssystem**

| | **Vergleichsversuch VV3** |
|---|---|
| **HXNBR-Latex-Feststoff [Gew.-Teile]** | 100 |
| **Schwefel [Gew.-Teile]** | 0,5 |
| **ZnO [Gew.-Teile]** | 5,0 |
| **ZDBC [Gew.-Teile]** | 0,25 |
| **pH-Wert** | 9,0 |
| **Feststoffgehalt [%]** | 35 |
| **Fₘₐₓ [MPa]** | 37,2 |
| **M100 [MPa]** | 2,9 |
| **Dehnung [%]** | 413,0 |

| | |
|---|---|
| Vulkanisationsbedingungen: 20 Minuten bei 125 C; | |

Tauchformungsartikel aus HXNBR-Latex mit Schwefel/ZnO-Vernetzung weisen zwar sehr hohe Zugfestigkeiten auf, jedoch gleichzeitig einen viel zu hohen M100-Wert von weit über 2,0 MPa.

**Tabelle 8. Einfluss der Vulkanisationstemperatur auf die Eigenschaften der Tauchformungsartikel aus HXNBR-Latex mit Schwefel als Vernetzungssystem**

| | **VV3.1** | **VV3.2** |
|---|---|---|
| **Vulkanisationstemperatur [°C]** | 100 | 125 |
| **Fₘₐₓ (median) [MPa]** | 10 | 37 |

Bei einer Vulkanisationstemperatur von 125 °C wurde beim HXNBR-Latex eine erhöhte Zugfestigkeit gemessen.

## Patentansprüche

1. **Zusammensetzung enthaltend**
(a) hydrierten carboxylierten Nitrilkautschuk-Latex (HXNBR-Latex),
(b) polyfunktionales Epoxid, und
(c) optional ein Mittel zur Einstellung des pH-Wertes,
wobei die Zusammensetzung einen **pH-Wert von 9 bis weniger als 11** aufweist

2. Zusammensetzung nach Anspruch 1, **dadurch gekennzeichnet, dass** der hydrierte, carboxylierte Nitrilkautschuk-Latex zu mindestens 50 % hydriert ist, bevorzugt zu mindestens 80 %.

3. Zusammensetzung nach Anspruch 1 oder 2, **dadurch gekennzeichnet, dass** der hydrierte, carboxylierte Nitrilkautschuk-Latex 0,1 bis 50 Gew.-%, bevorzugt 10 bis 45 Gew.-% **Nitrilmonomereinheiten** bezogen auf die Gesamtmenge an Monomereinheiten im hydrierten carboxylierten Nitrilkautschuk-Latex aufweist.

4. Zusammensetzung nach einem der Ansprüche 1 bis 3, **dadurch gekennzeichnet, dass** der hydrierte carboxylierte Nitrilkautschuk-Latex von 0,1 bis 30 Gew.-%, bevorzugt von 1 bis 20 Gew.-% und besonders bevorzugt von 2 bis 7 Gew.-%, **carboxylgruppenhaltige Termonomereeiheiten** bezogen auf die Gesamtmenge an Monomereinheiten im hydrierten carboxylierten Nitrilkautschuk-Latex aufweist.

5. Zusammensetzung nach einem der Ansprüche 1 bis 4, **dadurch gekennzeichnet, dass** das polyfunktionale Epoxid (b) ein **di- oder trifunktionales Epoxid**, bevorzugt ein difunktionales Epoxid ist.

6. Zusammensetzung nach einem der Ansprüche 1 bis 5, **dadurch gekennzeichnet, dass** die Zusammensetzung
(a) 100 Gew.-Teile HXNBR-Latex-Feststoff,
(b) 0,1 bis 50 Gew.-Teile, bevorzugt 0,5 bis 10 Gew.-Teile, besonders bevorzugt 1 bis 3 Gew.-Teile polyfunktionales Epoxid und
(c) 0 bis 10 Gew.-Teile eines Mittels zur Einstellung des pH-Wertes enthält,
wobei die Zusammensetzung einen pH Wert von 9 bis weniger als 11 aufweist.

7. Zusammensetzung nach einem der Ansprüche 1 bis 6, **dadurch gekennzeichnet, dass** die **Menge an Mittel (c) zur Einstellung des pH-Wertes** 0 bis 10 Gew.-Teile, bevorzugt 0,1 bis 5 Gew.-Teile bezogen auf 100 Gew.-Teile des HXNBR-Latex-Feststoffes beträgt.

8. Zusammensetzung nach einem der Ansprüche 1 bis 7, **dadurch gekennzeichnet, dass** das Mittel (c) zur Einstellung des pH-Wertes eine **Base**, bevorzugt eine anorganische Base, besonders bevorzugt KOH oder NaOH ist.

9. Zusammensetzung nach einem der Ansprüche 1 bis 8, **dadurch gekennzeichnet, dass** die Feststoffkonzentration 5 bis 65 Gew.-%, bevorzugt von 10 bis 60 Gew.-% bezogen auf die Gesamtmenge der Zusammensetzung beträgt.

10. **Verfahren** zur Herstellung von Vulkanisaten von hydriertem carboxylierten Nitrilkautschuk-Latex durch Vulkanisation von Zusammensetzungen gemäß einem der Ansprüche 1 bis 9 bei Temperaturen von 90 °C bis 200 °C, bevorzugt 120 °C bis 190 °C.

11. **Verwendung** der Zusammensetzungen gemäß einem der Ansprüche 1 bis 9 zur Herstellung von Vulkanisaten von hydriertem carboxylierten Nitrilkautschuk-Latex, bevorzugt zur Herstellung von Tauchformungsartikeln oder Beschichtungen, besonders bevorzugt zur Herstellung von Handschuhen.

12. **Vulkanisate von hydriertem carboxylierten Nitrilkautschuk-Latex**, bevorzugt **Tauchformungsartikel** oder **Beschichtungen**, besonders bevorzugt **Handschuhe**, hergestellt durch die Vulkanisation gemäß einem Verfahren nach einem der Ansprüche 10.

## Claims

1. **Composition** comprising
(a) hydrogenated carboxylated nitrile rubber latex (HXNBR latex),
(b) polyfunctional epoxide, and
(c) optionally an agent for adjusting the pH,
wherein the composition has a **pH of 9 to less than 11.**

2. Composition according to Claim 1, **characterized in that** the hydrogenated carboxylated nitrile rubber latex has been hydrogenated to an extent of at least 50%, preferably to an extent of at least 80%.

3. Composition according to Claim 1 or 2, **characterized in that** the hydrogenated carboxylated nitrile rubber latex includes 0.1% to 50% by weight, preferably 10% to 45% by weight, of **nitrile monomer units**, based on the total amount of monomer units in the hydrogenated carboxylated nitrile rubber latex.

4. Composition according to any of Claims 1 to 3, **characterized in that** the hydrogenated carboxylated nitrile rubber latex includes from 0.1% to 30% by weight, preferably from 1% to 20% by weight, and more preferably from 2% to 7% by weight, of **termonomer units containing carboxyl groups**, based on the total amount of monomer units in the hydrogenated carboxylated nitrile rubber latex.

5. Composition according to any of Claims 1 to 4, **characterized in that** the polyfunctional epoxide (b) is a **di- or trifunctional epoxide**, preferably a difunctional epoxide.

6. Composition according to any of Claims 1 to 5, **characterized in that** the composition contains
(a) 100 parts by weight of HXNBR latex rubber,
(b) 0.1 to 50 parts by weight, preferably 0.5 to 10 parts by weight, more preferably 1 to 3 parts by weight, of polyfunctional epoxide and
(c) 0 to 10 parts by weight of an agent for adjusting the pH,
wherein the composition has a pH of 9 to less than 11.

7. Composition according to any of Claims 1 to 6, **characterized in that** the **amount of agent (c) for adjusting the pH** is 0 to 10 parts by weight, preferably 0.1 to 5 parts by weight, based on 100 parts by weight of the HXNBR latex solids.

8. Composition according to any of Claims 1 to 7, **characterized in that** the agent (c) for adjusting the pH is a **base**, preferably an inorganic base, more preferably KOH or NaOH.

9. Composition according to any of Claims 1 to 8, **characterized in that** the solids concentration is 5% to 65% by weight, preferably from 10% to 60% by weight, based on the total amount of the composition.

10. **Process** for producing vulcanizates of hydrogenated carboxylated nitrile rubber latex by vulcanization of compositions according to any of Claims 1 to 9 at temperatures of 90°C to 200°C, preferably 120°C to 190°C.

11. **Use** of the compositions according to any of Claims 1 to 9 for production of vulcanizates of hydrogenated carboxylated nitrile rubber latex, preferably for production of dip-moulded articles or coatings, more preferably for production of gloves.

12. **Vulcanizates of hydrogenated carboxylated nitrile rubber latex**, preferably **dip-moulded articles** or **coatings**, more preferably **gloves**, produced by the vulcanization by a process according to any of Claims 10.

## Revendications

1. **Composition** contenant :
(a) un latex de caoutchouc de nitrile carboxylé hydrogéné (latex HXNBR),
(b) un époxyde polyfonctionnel, et
(c) éventuellement un moyen pour l'ajustement du pH,
la composition présentant un **pH de 9 à moins de 11.**

2. Composition selon la revendication 1, **caractérisée en ce que** le latex de caoutchouc de nitrile carboxylé hydrogéné est hydrogéné à hauteur d'au moins 50 %, de préférence à hauteur d'au moins 80 %.

3. Composition selon la revendication 1 ou 2, **caractérisée en ce que** le latex de caoutchouc de nitrile carboxylé hydrogéné comprend 0,1 à 50 % en poids, de préférence 10 à 45 % en poids, **d'unités monomères nitrile**, par rapport à la quantité totale d'unités monomères dans le latex de caoutchouc de nitrile carboxylé hydrogéné.

4. Composition selon l'une quelconque des revendications 1 à 3, **caractérisée en ce que** le latex de caoutchouc de nitrile carboxylé hydrogéné comprend de 0,1 à 30 % en poids, de préférence de 1 à 20 % en poids et de manière particulièrement préférée de 2 à 7 % en poids, **d'unités termonomères contenant des groupes carboxyle**, par rapport à la quantité totale d'unités monomères dans le latex de caoutchouc de nitrile carboxylé hydrogéné.

5. Composition selon l'une quelconque des revendications 1 à 4, **caractérisée en ce que** l'époxyde polyfonctionnel (b) est un **époxyde di-ou trifonctionnel**, de préférence un époxyde difonctionnel.

6. Composition selon l'une quelconque des revendications 1 à 5, **caractérisée en ce que** la composition contient :
(a) 100 parties en poids de solide de latex HXNBR,
(b) 0,1 à 50 parties en poids, de préférence 0,5 à 10 parties en poids, de manière particulièrement préférée 1 à 3 parties en poids d'époxyde polyfonctionnel, et
(c) 0 à 10 % en poids d'un moyen pour l'ajustement du pH,
la composition présentant un pH de 9 à moins de 11.

7. Composition selon l'une quelconque des revendications 1 à 6, **caractérisée en ce que** la **quantité de moyen (c) pour l'ajustement du pH** est de 0 à 10 parties en poids, de préférence de 0,1 à 5 parties en poids, par rapport à 100 parties en poids du solide de latex HXNBR.

8. Composition selon l'une quelconque des revendications 1 à 7, **caractérisée en ce que** le moyen (c) pour l'ajustement du pH est une **base**, de préférence une base inorganique, de manière particulièrement préférée KOH ou NaOH.

9. Composition selon l'une quelconque des revendications 1 à 8, **caractérisée en ce que** la concentration en solides est de 5 à 65 % en poids, de préférence de 10 à 60 % en poids, par rapport à la quantité totale de la composition.

10. **Procédé** de fabrication de vulcanisats de latex de caoutchouc de nitrile carboxylé hydrogéné par vulcanisation de compositions selon l'une quelconque des revendications 1 à 9 à des températures de 90 °C à 200 °C, de préférence de 120 °C à 190 °C.

11. **Utilisation** des compositions selon l'une quelconque des revendications 1 à 9 pour la fabrication de vulcanisats de latex de caoutchouc de nitrile carboxylé hydrogéné, de préférence pour la fabrication d'articles formés par immersion ou de revêtements, de manière particulièrement préférée pour la fabrication de gants.

12. **Vulcanisats de latex de caoutchouc de nitrile carboxylé hydrogéné**, de préférence **articles formés par immersion** ou **revêtements**, de manière particulièrement préférée **gants**, fabriqués par la vulcanisation par un procédé selon la revendication 10.
